Europäisches Patentamt

(19) European Patent Office

Office européen des brevets

(11) Veröffentlichungsnummer: **0 195 282**
A2

# (12) EUROPÄISCHE PATENTANMELDUNG

(21) Anmeldenummer: 86102508.8

(22) Anmeldetag: 26.02.86

(51) Int. Cl.⁴: **B 60 S 9/08**

(30) Priorität: 16.03.85 DE 3509636

(43) Veröffentlichungstag der Anmeldung:
24.09.86 Patentblatt 86/39

(84) Benannte Vertragsstaaten:
AT BE CH DE FR GB IT LI NL SE

(71) Anmelder: Jost-Werke GmbH
Siemensstrasse 2
D-6078 Neu Isenburg(DE)

(72) Erfinder: Dreyer, Hans
Wolfgang-Borchert-Strasse 13
D-6073 Egelsbach-Bayerseich(DE)

(72) Erfinder: Müller, Gerald
Wilhelm-Leuschner-Strasse 58
D-6054 Rodgau 5(DE)

(74) Vertreter: Köhler, Günter, Dipl.-Ing.
Nordring 1
D-6458 Rodenbach(DE)

(54) Sattelanhänger.

(57) Bei einem Sattelanhänger mit je einer Teleskopstütze (4) auf beiden seiten des Fahrgestells (1) zwischen dem Sattelzapfen und den Rädern des Sattelanhängers können die ausgefahrenen Teleskopstützen bei starrer Verbindung mit dem Fahrgestell und Absenkung des hinteren Fahrgestellendes verbiegen. Um dies zu vermeiden, ist dafür gesorgt, daß jede Teleskopstütze (4) um eine horizontale Querachse (8) des Fahrgestells (1) gegen Federkraft zwischen einer zur Längsachse des Fahrgestells (1) senkrechten Lage und einer Lage, in der die Längsrichtung des zwischen der Teleskopstütze (4) und dem hinteren Fahrgestellende liegenden Fahrgestellabschnitts mit der teleskopstütze (4) einen kleineren Winkel als 90˙ einschließt, schwenkbar gelagert ist.

Fig. 2

## Dipl.-Ing. Günter Köhler
### Patentanwalt

0195282

51 84 / 5 19 58
: Regudatent
nto Ffm 2614 31-600
asse Hanau 15123996

Nordring 1
D-6458 Rodenbach

den 24.2.1986

895

– 1 –

JOST-WERKE GmbH, D-6078 Neu Isenburg

## Sattelanhänger

Die Erfindung bezieht sich auf einen Sattelanhänger mit je einer Stütze auf beiden Seiten des Fahrgestells zwischen dem vorderen Fahrgestellende und den Rädern des Sattelanhängers.

Bei einem bekannten Sattelanhänger sind Teleskopstützen oder Klappstützen starr am Fahrgestell befestigt. Wenn der Sattelanhänger von der Sattelzugmaschine abgekuppelt ist, wird der Sattelanhänger mit Hilfe dieser Stützen abgestützt, um die Ladefläche des Sattelanhängers in horizontaler Lage zu halten. Nach längerer Standzeit des Sattelanhängers pflegt jedoch der Luftdruck in den Reifen der Räder und bei luftgefederten Sattelanhängern der Luftdruck in den Federbälgen nachzulassen. Dies führt zu einer Absenkung des hinteren Endes des Sattelanhängers relativ zu dem durch die Teleskopstützen abgestützten vorderen Ende. Eine derartige Absenkung kann auch auftreten, wenn der Sattelanhänger stoßartig mit einer höheren Last beladen wird. Die Folge ist eine Biegebeanspruchung und entsprechende Verbiegung der auf dem Untergrund zumeist fest aufstehenden Teleskopstützen. Nach einer solchen Verbiegung lassen sich die Teleskopstützen daher nicht wieder einfahren.

Der Erfindung liegt die Aufgabe zugrunde, einen Sattelanhänger der gattungsgemäßen Art anzugeben, bei dem eine Verbiegung der ausgefahrenen Teleskopstützen bei einer Absenkung des hinteren Endes des Sattelanhängers vermieden wird.

Erfindungsgemäß ist diese Aufgabe dadurch gelöst, daß jede Stütze um eine horizontale Querachse des Fahrgestells gegen Federkraft zwischen einer zur Längsrichtung des Fahrgestells senkrechten Lage und einer Lage, in der die Längsrichtung des zwischen der Stütze und dem hinteren Fahrgestellende liegenden Fahrgestellabschnitts mit der Stütze einen kleineren Winkel als 90$^{o}$ einschließt, schwenkbar gelagert ist.

Wenn hierbei das hintere Ende des auf den Stützen abgestützten Sattelanhängers abgesenkt wird, kann sich der Sattelanhänger relativ zu den Stützen drehen, so daß diese ihre vertikale Lage beibehalten und sich nicht verbiegen. Der begrenzte Schwenkwinkel stellt sicher, daß die Stützen auch bei einer geringfügigen Verschiebung des Sattelanhängers in Fahrtrichtung ihre Stützfunktion beibehalten und sich beim Einfahren selbsttätig durch die Federkraft wieder in eine Lage senkrecht zur Längsrichtung des Fahrgestells einstellen.

Vorzugsweise ist dafür gesorgt, daß in der Schwenkebene jeder Stütze eine federbelastete Kolben-Zylinder-Einheit in einem Abstand von der Querachse einerseits mit dem Fahrgestell und andererseits mit der Stütze gelenkig verbunden ist. Diese Kolben-Zylinder-Einheit sorgt auf einfache Weise aufgrund ihres begrenzten Hubs für eine Begrenzung des Schwenkwinkels bei einer relativen Verschwenkung von Fahrgestell und Stützen.

Hierbei kann zwischen der Stirnfläche des Kolbens und dem Boden des Zylinders eine Druckfedereinrichtung angeordnet sein, die für die Rückstellung der betreffenden Teleskopstütze in ihre zur Längsachse des Fahrgestells senkrechte Lage sorgt. Bei dieser Anordnung ist die Druckfedereinrichtung gleichzeitig gegen Verschmutzung geschützt.

Eine einfache Ausbildung der Druckfedereinrichtung besteht darin, daß sie Tellerfedern aufweist.

Die Tellerfedern können aus Kunststoff bestehen und mit konzentrischen Durchbrüchen versehen sein, in die an der Kolbenstirnfläche und dem Zylinderboden koaxial vorstehende Zapfen ragen, die in der Ausfahrendlage des Kolbens einen dem Schwenkwinkel der Stütze entsprechenden Abstand aufweisen. Diese Zapfen sorgen zum einen für eine Begrenzung des Schwenkwinkels in der einen Richtung und verhindern zum anderen ein übermäßiges Zusammendrücken der Tellerfedern.

Die Druckfedereinrichtung kann auch ein Druckgas aufweisen.

Sodann kann das Drehlager jeder Stütze ein Gleitlager sein. Gleitlager haben den Vorteil, daß sie wenige Bauteile aufweisen, hoch belastbar und wartungsarm bzw. wartungsfrei sind.

Vorzugsweise ist ferner dafür gesorgt, daß das Gleitlager zwei konzentrische, sich zur Axialsicherung hintergreifende Lagerringe aufweist, von denen der eine am Fahrgestell und der andere an der Stütze befestigt ist und zwischen denen ein Gleitring aus gleitfähigem Material angeordnet ist. Bei dieser Ausbildung entfällt eine Schmierung des Gleitlagers.

Bei einem Sattelanhänger, bei dem die Stützen Teleskopstützen sind, mit einer Getriebe der Teleskopstützen verbindenden Antriebswelle zum Aus- und Einfahren der Teleskopstützen kann der radial innere Lagerring die Antriebswelle mit Spiel umgeben. Die Teleskopstützen sind daher weiterhin von einer Seite her bedienbar, da sie gleichzeitig ungehindert um die beiden Teleskopstützen gemeinsame Antriebswelle drehbar sind.

Wenn zwischen den Stützen eine Verstrebung vorgesehen ist, die üblicherweise auch mit dem Fahrgestell verbunden ist, ist sie nunmehr ausschließlich mit den Stützen verbunden, um das Verschwenken der Stützen zu ermöglichen.

Die Erfindung und ihre Weiterbildungen werden nachstehend anhand der Zeichnungen bevorzugter Ausführungsbeispiele näher beschrieben. Es zeigen:

Fig. 1 eine schematische Darstellung des Fahrgestells eines erfindungsgemäßen Sattelanhängers in zwei verschiedenen Lagen,

Fig. 2 einen vergrößerten Ausschnitt der Fig. 1,

Fig. 3 den Schnitt A-A der Fig. 1,

Fig. 4 einen Längsschnitt durch eine abgefederte Kolben-Zylinder-Einheit, die zwischen dem Fahrgestell und einer Teleskopstütze des Sattelanhängers angelenkt ist,

Fig. 5 eine Seitenansicht eines die Teleskopstütze mit dem Fahrgestell verbindenden Drehlagers und

Fig. 6 den Schnitt B-B der Fig. 5.

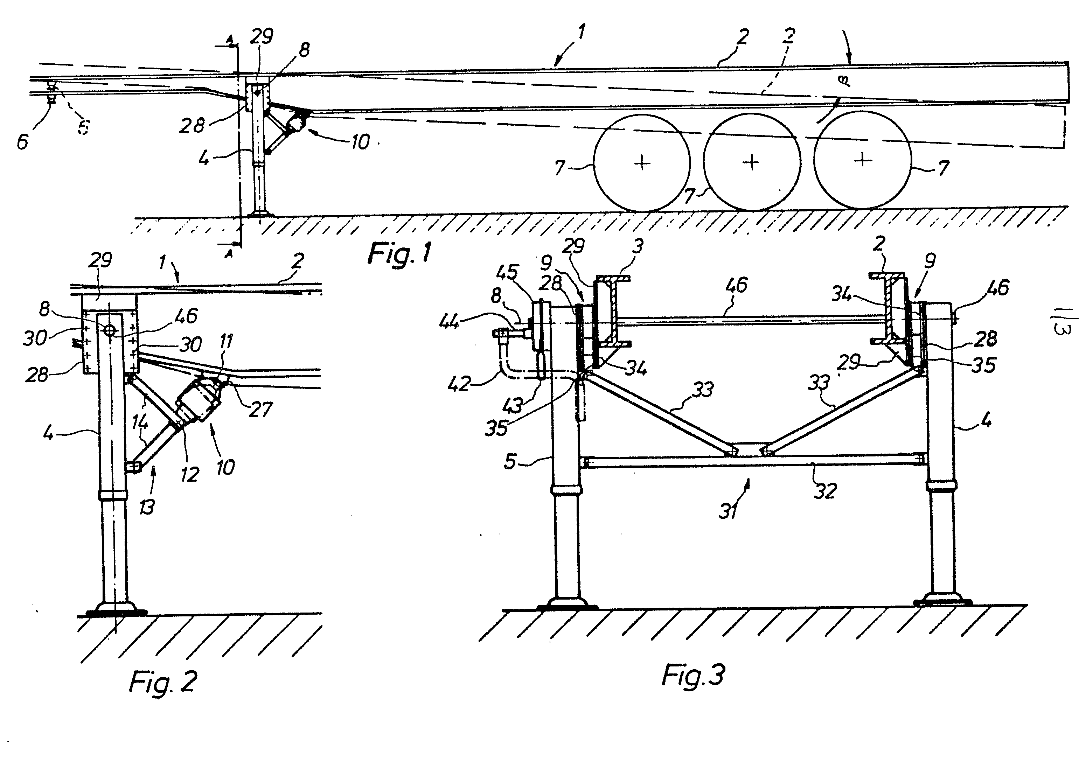

Nach den Fig. 1 bis 3 sind an einem Sattelanhänger-Fahrgestell 1, von dem zur Vereinfachung der Darstellung nur die beiden Hauptträger 2 und 3 dargestellt sind, Teleskopstützen 4 und 5 zwischen einem Zugsattelzapfen 6 und den Rädern 7 um eine horizontale Querachse 8 mittels je eines Gleitlagers 9 schwenkbar gelagert, um eine Verbiegung der Teleskopstützen 4, 5 in ihrer dargestellten ausgefahrenen Lage bei einer Absenkung des hinteren Fahrgestellendes, sei es beim Beladen oder bei einem Luftverlust in den Rädern 7 nach längerer Standzeit, zu vermeiden. Der Schwenkwinkel der Teleskopstützen 4, 5 ist durch eine federbelastete Kolben-Zylinder-Einheit 10 auf den maximalen Absenkwinkel ß des Fahrgestells zwischen der in Fig. 1 durch ausgezogene Linien und strichpunktierte Linien dargestellten Horizontal- und Absenklage begrenzt.

Jede Kolben-Zylinder-Einheit 10 ist um eine Querachse 11 des Fahrgestells 1 zwischen der Drehachse 8 und den Rädern 7 drehbar am Fahrgestell 1 und um eine Drehachse 12 über eine Verstrebung 13, die aus zwei einerseits miteinander und andererseits mit der betreffenden Teleskopstütze 4, 5 axial auseinanderliegend verbundenen Streben 14 besteht, drehbar an der betreffenden Teleskopstütze 4 bzw. 5 befestigt.

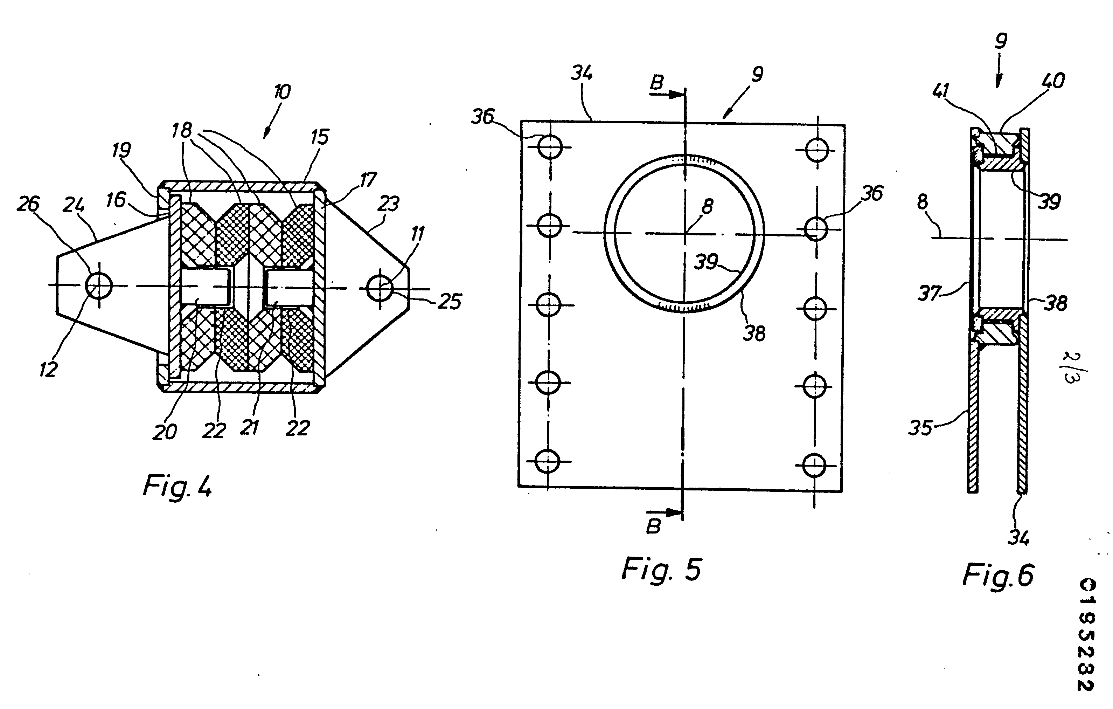

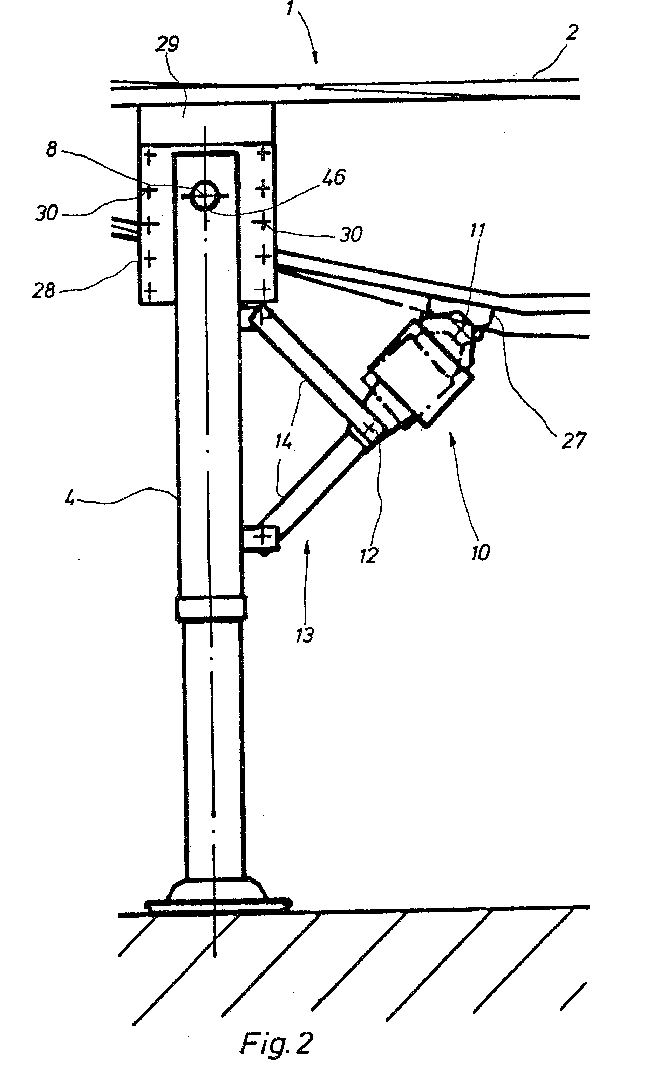

Nach Fig. 4 weist die Kolben-Zylinder-Einheit 10 einen Zylinder 15 und einen Kolben 16 auf, der axial in dem Zylinder 15 verschiebbar gelagert ist. Zwischen der Stirnfläche des Kolbens 16 und dem Boden 17 des Zylinders 15 sind Tellerfedern 18 aus elastischem Material, vorzugsweise Kunststoff oder Gummi, angeordnet, die den Kolben 16 gegen einen als Anschlag wirkenden, radial nach innen ragenden Ringflansch 19 drücken. Bei entsprechender Abdichtung des Kolbens 16 gegen den Zylinder 15 kann zusätzlich ein Druckgas im Zylinder enthalten sein. An der Stirnfläche des Kolbens 16 und am Boden 17 des Zylinders 15 steht jeweils ein koaxialer Zapfen 20 bzw. 21 vor. Diese Zapfen 20, 21 ragen in koaxiale Durchbrüche 22 der Tellerfedern 18 und haben bei am Anschlag 19 anliegendem Kolben 16 einen axialen Abstand, der dem maximalen Absenkwinkel ß des Fahrgestells 1 entspricht. Der Schwenkwinkel der Teleskopstützen 4, 5 relativ zum Fahrgestellt 1 ist daher durch das Anschlagen des Kolbens am Ringflansch 19 einerseits bzw. des Zapfens 20 am Zapfen 21 andererseits auf diesen Winkel ß begrenzt. Gleichzeitig stellen die Zapfen 20, 21 sicher, daß die Tellerfedern 18 nicht übermäßig zusammengedrückt werden können.

Die Tellerfedern 18 sorgen beim Ausfahren der Teleskopstützen 4, 5 in der Normallage des Fahrgestells 1 dafür, daß die Teleskopstützen vertikal stehen.

Auf der Außenseite des Bodens 17 und des Kolbens 16 ist jeweils eine axial vorstehende Lasche 23 bzw. 24 befestigt, die jeweils eine Querbohrung 25 bzw. 26 zur Durchführung eines Gelenkbolzens aufweisen. Diese Gelenkbolzen werden einerseits durch eine Bohrung in einer entsprechenden Lasche 27 (Fig. 2) am Fahrgestell bzw. in den miteinander verbundenen Enden der Streben 14 hindurchgeführt.

An jeder Teleskopstütze 4 bzw. 5 ist an der dem Fahrgestell 1 zugekehrten Seite nach den Fig. 1 bis 3 eine Platte 28 angeschweißt. Nach Fig. 3 ist auch auf den den Teleskopstützen 4, 5 zugekehrten Seiten des Fahrgestells 1 bzw. der Träger 2, 3 jeweils eine Platte 29 angeschweißt.

Die Platten 28 und 29 sind jeweils mit Befestigungslöchern 30 versehen.

Nach Fig. 3 sind die Teleskopstützen 4 und 5 durch eine Querverstrebung 31, bestehend aus einer Querstrebe 32 und zwei schrägen Streben 33, die alle in einer vertikalen Querebene des Fahrgestells liegen, miteinander verbunden.

Die Gleitlager 9 sind nach Fig. 3 jeweils zwischen den Platten 28 und 29 befestigt und weisen jeweils zwei parallele Platten 34 und 35 auf, die an den einander zugekehrten Seiten der Platten 28 und 29 angeschraubt sind. Zu diesem Zweck sind auch die Platten 34 und 35 mit den Befestigungslöchern 30 entsprechenden Befestigungslöchern 36 (Fig. 5) zur Durchführung von Schraubbolzen versehen.

Nach den Fig. 5 und 6 sind die Platten 34 und 35 mit zur Drehachse 8 koaxialen Löchern 37 und 38 versehen. Wie Fig. 6 zeigt, ist an der Innenseite der Platte 34 ein Lagerring 39 und an der Innenseite der Platte 35 ein Lagerring 40 angeschweißt. Die Lagerringe 39 und 40 sind konzentrisch zueinander und koaxial zur Drehachse 8. Der radial innere Lagerring 39 hat einen Innendurchmesser, der kleiner ist als der Durchmesser der Löcher 37 und 38. Ferner hat er eine außen umlaufende Nut, in der der äußere Lagerring 40 gelagert ist, so daß sich die beiden Lagerringe 39 und 40 zur Axialsicherung hintergreifen. Zwischen den beiden Lagerringen 39 und 40 ist ein Gleitring 41 aus gleitfähigem Kunststoff oder Sintermetall angeordnet.

Um die Teleskopstützen 4 und 5 in die in den Fig. 1 bis 3 dargestellte Lage auszufahren bzw. wiedereinzufahren, wird eine Handkurbel 42, die in Fig. 3 in der Ruhelage in einem Halter 43 eingehängt dargestellt ist, auf das Ende einer Stummelwelle 44 gesteckt und gedreht. Die Drehung der Stummelwelle 44 wird über ein Untersetzungsgetriebe 45, das auf der Außenseite der Teleskopstütze 45 angebracht ist, auf eine zur Drehachse 8 koaxiale Antriebswelle 46 übertragen. Über im Inneren der Teleskopstützen 4 und 5 enthaltene Umlenkgetriebe wird die Drehung der Antriebswelle 46 auf im Inneren der Teleskopstützen 4 und 5 enthaltene, mit den ausfahrbaren unteren Abschnitten der Teleskopstützen zusammenwirkende Spindeln übertragen. Die Antriebswelle 46 ist im Fahrgestell 1 bzw. den Trägern 2 und 3 drehbar gelagert und durchsetzt die inneren Ringe 39 der Gleitlager 9 koaxial und mit Spiel. Die Teleskopstützen 4, 5 können daher unabhängig von einer Drehung der Antriebswelle 46 um die Querachse 8 relativ zum Fahrgestell 1 geschwenkt werden.

Abwandlungen des dargestellten Ausführungsbeispiels können darin bestehen, daß die Drehlager 9 als Wälzlager, die Tellerfedern aus Metall und die Stützen als Klappstützen ausgebildet sind. Sodann können anstelle der Tellerfedern Schraubenfedern oder Gummi-Hohlfedern vorgesehen sein.

Die Kolben-Zylinder-Einheiten 10 können ferner auf der in Fig. 1 linken Seite der Stützen 4, 5 angebracht sein. Gegebenenfalls ist die Druckfedereinrichtung zwischen Kolben 16 und Flansch 19 angeordnet und die Lasche 24 durch eine Stange ersetzt. Gegebenenfalls kann der Kolben als Topf ausgebildet sein, in dem die Druckfedereinrichtung teilweise angeordnet ist, um den Kolbenhub zu begrenzen. Bei entsprechend umgekehrter Anbringung kann die Federeinrichtung auch als Zugfeder ausgebildet sein.

- 1 -

Patentansprüche

1. Sattelanhänger mit je einer Stütze auf beiden Seiten des Fahrgestells zwischen dem vorderen Fahrgestellende und den Rädern des Sattelanhängers, d a d u r c h   g e k e n n z e i c h n e t , daß jede Stütze (4, 5) um eine horizontale Querachse (8) des Fahrgestells gegen Federkraft zwischen einer zur Längsrichtung des Fahrgestells (1) senkrechten Lage und einer Lage, in der die Längsrichtung des zwischen der Stütze (4; 5) und dem hinteren Fahrgestellende liegenden Fahrgestellabschnitts mit der Stütze (4; 5) einen kleineren Winkel als 90° einschließt, schwenkbar gelagert ist.

2. Sattelanhänger nach Anspruch 1, d a d u r c h   g e k e n n z e i c h n e t , daß in der Schwenkebene jeder Stütze (4; 5) eine federbelastete Kolben-Zylinder-Einheit (10) in einem Abstand von der Querachse (8) einerseits mit dem Fahrgestell (1) und andererseits mit der Stütze (4; 5) gelenkig verbunden ist.

3. Sattelanhänger nach Anspruch 2, d a d u r c h   g e k e n n z e i c h n e t , daß zwischen der Stirnfläche des Kolbens (16) und dem Boden (17) des Zylinders (15) eine Druckfedereinrichtung (18) angeordnet ist.

4. Sattelanhänger nach Anspruch 3,
d a d u r c h   g e k e n n z e i c h n e t ,
daß die Druckfedereinrichtung Tellerfedern (18) aufweist.

5. Sattelanhänger nach Anspruch 4,
d a d u r c h   g e k e n n z e i c h n e t ,
daß die Tellerfedern (18) aus Kunststoff bestehen und mit
konzentrischen Durchbrüchen (22) versehen sind, in die
an der Kolbenstirnfläche und dem Zylinderboden (17) koaxial vorstehende Zapfen (20, 22) ragen, die in der Ausfahrendlage des Kolbens (16) einen dem Schwenkwinkel (ß)
der Teleskopstütze (4; 5) entsprechenden Abstand aufweisen.

6. Sattelanhänger nach einem der Ansprüche 3 bis 5,
d a d u r c h   g e k e n n z e i c h n e t ,
daß die Druckfedereinrichtung ein Druckgas aufweist.

7. Sattelanhänger nach einem der Ansprüche 1 bis 6,
d a d u r c h   g e k e n n z e i c h n e t ,
daß das Drehlager jeder Stütze (4; 5) ein Gleitlager (9)
ist.

8. Sattelanhänger nach Anspruch 7,
d a d u r c h   g e k e n n z e i c h n e t ,
daß das Gleitlager (9) zwei konzentrische, sich zur Axialsicherung hintergreifende Lagerringe (39, 40) aufweist,
von denen der eine (40) am Fahrgestell (1) und der andere
(39) an der Stütze (4; 5) befestigt ist und zwischen denen
ein Gleitring (41) aus gleitfähigem Material angeordnet
ist.

9. Sattelanhänger nach Anspruch 8, bei dem die Stützen
Teleskopstützen sind, mit einer Getriebe der Teleskopstützen verbindenden Antriebswelle zum Aus- und Einfahren

der Teleskopstützen,

d a d u r c h   g e k e n n z e i c h n e t ,

daß der radial innere Lagerring (39) die Antriebswelle
(46) mit Spiel umgibt.

10. Sattelanhänger nach einem der Ansprüche 1 bis 9, mit
einer Verstrebung zwischen den Stützen,

d a d u r c h   g e k e n n z e i c h n e t ,

daß die Verstrebung (31) ausschließlich mit den Stützen
(4, 5) verbunden ist.

0195282

1/3

Fig.1

Fig.2

Fig.3

Fig. 4

Fig. 5

Fig.6

0195282

Fig. 2